# EUROPÄISCHE PATENTSCHRIFT

(11) **EP 3 356 697 B1**
(45) Veröffentlichungstag und Bekanntmachung des Hinweises auf die Patenterteilung: **03.06.2020**
(21) Anmeldenummer: 16779032.8
(22) Anmeldetag: 29.09.2016
(51) Int. Cl.: F16G 15/06

(54) **BAUTEIL DER HEBE-, ZURR- ODER ANSCHLAGTECHNIK, INSBESONDERE SCHÄKEL, FÜR OUTDOOR- ODER OFFSHORE-ANWENDUNGEN**
COMPONENT FOR LIFTING, LASHING OR STOP TECHNOLOGY, PARTICULARLY SHACKLES FOR OUTDOOR OR OFFSHORE APPLICATIONS
ÉLÉMENT RELEVANT DES TECHNIQUES DE LEVAGE, AMARRAGE OU BLOCAGE, EN PARTICULIER MANILLES, POUR DES APPLICATIONS EN EXTÉRIEUR OU OFFSHORE

(30) Priorität: 29.09.2015 DE 102015218801
(43) Veröffentlichungstag der Anmeldung: 08.08.2018
(73) Patentinhaber: RUD Ketten Rieger & Dietz GmbH u. Co. KG, 73432 Aalen (DE)
(72) Erfinder: BETZLER, Michael, 73453 Abtsgmünd (DE)
(74) Vertreter: Grünecker Patent- und Rechtsanwälte PartG mbB
(86) Internationale Anmeldenummer: PCT/EP2016/073320
(87) Internationale Veröffentlichungsnummer: WO 2017/055486

(56) Entgegenhaltungen:
- GB-A- 281 556
- US-A- 2 097 465
- US-A- 5 046 881
- US-A- 5 433 547

## Beschreibung

Die Erfindung betrifft ein Bauteil der Hebe-, Zurr- oder Anschlagtechnik für Outdoor- oder Offshore-Anwendungen, insbesondere in Schäkelform.

Outdoor- und Offshore-Anwendungen beinhalten beispielsweise den Einsatz auf Schiffen, unter Wasser, in Hafenanlagen, in militärischen Einsätzen, in den Bergen oder bei Rettungseinsätzen. Aus der US 5,046,881 A ist beispielsweise ein Schäkel mit arretiertbarem Bolzen bekannt, der mit einer Hand des Benutzers verrastet oder entrastet werden kann, ohne dass sich der Bolzen komplett aus dem Schäkel lösen kann, wobei der Bolzen hierfür eine umlaufende Nut und eine Längsnut aufweist. Die hierbei verwendeten Bauteile müssen zum Teil erhebliche Lasten aufnehmen können und gleichzeitig auch unter widrigen Umweltbedingungen einfach benutzbar sein.

Diese Anforderungen löst die Erfindung, indem das eingangs genannte Bauteil mit einer von einem Grundkörper gebildeten Öffnung, die wenigstens einen verschließbaren Durchlass aufweist, mit einem Schließorgan, durch das in einer Schließstellung der Durchlass verschlossen ist, mit einem Verschluss, durch den das Schließorgan in der Schließstellung gegenüber dem Grundkörper drehbar und gegen ein Öffnen des Durchlasses gesichert gehalten ist, und mit einer Verschlusssperre, die selbsttätig in der Schließstellung aktiviert ist, durch die der Verschluss in der Schließstellung blockiert ist und die ein von Hand werkzeugfrei betätigbar ausgestaltetes Greiforgan zum Lösen der Verschlusssperre aufweist, versehen ist. Ferner weist der Verschluss drehbar in Eingriff miteinander bringbare Verschlusselemente an dem Schließorgan und an einer drehbar am Grundkörper gehalterten Aufnahme für das Schließorgan auf.

Bei dem erfindungsgemäßen Bauteil reduziert die gegenüber dem Grundkörper drehbare Lagerung des Schließorgans dessen Verschleiß. Außerdem wird der Verschluss entlastet. Das Schließorgan kann einer Torsionsbelastung durch Drehung nachgeben, ohne dass es im Verschluss abgestützt werden muss.

Durch den Verschluss ist das Schließorgan in der Schließstellung gesichert, so dass der Durchlass sicher verschlossen ist. Die Verschlusssperre sichert den Verschluss, so dass dieser sich nicht zufällig lösen kann. Damit die Verschlusssperre auch unter widrigen Umständen einfach von Hand gelöst werden kann, ist das Greiforgan werkzeugfrei betätigbar ausgestaltet. Durch die selbsttätige Aktivierung der Verschlusssperre in der Schließstellung muss sich eine Bedienperson keine Gedanken über die ordnungsgemäße Aktivierung der Verschlusssperre machen, was die Handhabung erleichtert.

Die Erfindung kann durch die folgenden, jeweils für sich vorteilhaften und unabhängig voneinander miteinander kombinierbaren Ausgestaltungen weiter verbessert werden.

So ist es beispielsweise von Vorteil, wenn für eine Bedienperson sofort ersichtlich ist, ob die Verschlusssperre aktiviert ist. Dies wird beispielsweise durch ein Indikatororgan erreicht, das bei aktivierter Verschlusssperre von außerhalb des Bauteils erkennbar und bei nicht aktivierter Verschlusssperre verdeckt, und damit von außerhalb des Bauteils nicht erkennbar, oder alternativ, bei nicht aktivierter Verschlusssperre von außerhalb des Bauteils erkennbar und bei aktivierter Verschlusssperre verdeckt angeordnet ist. Das Indikatororgan signalisiert so, dass die Schließstellung des Bauteils erreicht, das Schließorgan im Verschluss gesichert und der Verschluss durch die Verschlusssperre gesperrt ist. Es können auch zwei Indikatororgane vorgesehen sein, von denen nur das eine sichtbar ist, wenn die Schließstellung noch nicht erreicht ist, und nur das andere, wenn die Schließstellung eingenommen ist.

Auf einfache Weise kann die Erkennbarkeit des Indikatororgans erhöht werden, wenn es in dem erkennbaren Zustand aus seiner Umgebung hervorragt. Insbesondere kann das Indikatororgan in Richtung einer Längsachse des Schließorgans, bei einem Schließbolzen als Schließorgan beispielsweise die Längsachse des Schließbolzens, vorstehen und/oder in der Richtung, in der das Schließorgan in den Grundkörper eingesetzt wird. Bevorzugt ist das Indikatororgan an einer von der Öffnung abgewandten Seite des Grundkörpers angeordnet. Die beiden vorstehenden Maßnahmen führen jeweils unabhängig dazu, dass das Indikatororgan von Bauteilen, die in die Öffnung eingehängt sind, nicht beschädigt werden kann.

Das Indikatororgan kann sich in einer weiteren vorteilhaften Ausgestaltung am Schließorgan oder am Greiforgan befinden. Bei dieser Ausgestaltung gibt das Indikatororgan unmittelbar die Stellung des Schließorgans oder des Greiforgans wieder. Insbesondere kann sich das Indikatororgan in einem Abschnitt des Schließorgans befinden, der sich in der Schließstellung im Verschluss und/oder der Verschlusssperre befindet. Ein Indikatororgan kann auch alternativ an einem Kopf des Schließorgans angeordnet sein. Verschluss und Verschlusssperre können in der Schließstellung drehfest gekoppelt sein.

Die Verschlusssperre ist bevorzugt so ausgestaltet, dass sie ausschließlich in der Schließstellung, bei einer insbesondere bei einer einzigen vorbestimmten Stellung des Verschlusses, aktivierbar bzw. aktiviert ist. Dies stellt sicher, dass der Verschluss nicht vorzeitig, vor einem vollständigen Erreichen der Schließposition, gesperrt ist und eine nur unvollständige Sicherung des Schließorgans in der Schließstellung stattfindet.

Die Verschlusssperre kann wenigstens zwei miteinander verrastende Sperrelemente aufweisen, wobei das Indikatororgan mit einem der Sperrelemente bewegungsübertragend verbunden sein kann. Bei dieser Ausgestaltung gibt das Indikatororgan die Lage des mit ihm verbundenen Sperrelements an. Die wenigstens zwei Sperrelemente sind relativ zueinander in einer Betätigungsrichtung beweglich zwangsgeführt.

Das Indikatororgan kann in einer konstruktiv einfachen Variante stoffschlüssig mit einem der Sperrelemente verbunden sein, insbesondere monolithisch, beispielsweise durch Urformen oder Umformen. Wenn das Indikatororgan ein separates Teil ist, kann auch eine formschlüssige Verbindung von Indikatororgan und einem der Sperrelemente vorgesehen sein.

In einer weiteren Ausgestaltung kann ein relativ zum Indikatororgan bewegliches, insbesondere ein in Überdeckung mit dem Indikatororgan bewegliches Abdeckorgan vorgesehen sein, das mit einem der Sperrelemente bewegungsübertragend verbunden sein kann. Das Abdeckorgan kann zwischen einer Freigabestellung und einer Abdeckstellung in Abhängigkeit von der relativen Position der Sperrelemente beweglich am Grundkörper angeordnet sein. In der Abdeckposition deckt das Abdeckorgan dann das Indikatororgan ab, so dass das Indikatororgan von außen nicht erkennbar ist. In der Freigabeposition sind Indikatororgan und Abdeckorgan relativ zueinander aus einer Überdeckung bevorzugt gegen die Wirkung einer Sicherungsfeder bewegt, insbesondere verschoben, so dass das Indikatororgan von außen erkennbar ist.

In einer Ausgestaltung kann das Abdeckorgan eine Ringform und das Indikatororgan eine Stiftform aufweisen, wobei das Indikatororgan innerhalb des Abdeckorgans angeordnet ist. Durch eine Relativbewegung zwischen dem ringförmigen Abdeckorgan und dem stiftförmigen Indikatororgan kann somit das Indikatororgan abgedeckt oder freigegeben werden. Durch die Ringform des Abdeckorgans wird auf einfache Weise erreicht, dass bei einer Relativbewegung des Abdeckorgans zum Indikatororgan das Indikatororgan in jeder rotatorischen Abdeckposition des Abdeckorgans verdeckt werden kann und das Indikatororgan nur in der Freigabeposition von außen erkennbar ist.

Das Abdeckorgan kann stoffschlüssig mit einem der Sperrelemente verbunden sein, insbesondere monolithisch, beispielsweise durch Urformen oder Umformen. Das Sperrelement kann auch durch ein Befestigungsmittel, beispielsweise wenigstens eine Schraube oder wenigstens einen Niet am Abdeckorgan befestigt sein.

Das Indikatororgan kann mit dem einen und das Abdeckorgan mit dem anderen Sperrelement der Verschlusssperre gekoppelt sein, so dass sich die relative Position der Sperrelemente zueinander automatisch auf die relative Position des Abdeckorgans zum Indikatororgan überträgt.

Ferner kann sich entweder das Indikatororgan am Schließorgan und das Abdeckorgan am Greiforgan oder das Indikatororgan am Greiforgan und das Abdeckorgan am Schließorgan befinden. Beide Ausgestaltungen sind insbesondere dann sinnvoll, wenn das Greiforgan mit einem Sperrelement der Verschlusssperre verbunden ist, so dass die Position des Greiforgans repräsentativ für die Stellung des mit dem Greiforgan verbundenen Sperrelements ist. Indikatororgan und Abdeckorgan geben dann die relative Lage des Greiforgans zum Schließorgan wieder.

Unabhängig davon, ob ein Indikatororgan oder ein Abdeckorgan oder beide vorgesehen sind, können für die Ausgestaltung und Anordnung der Sperrelemente der Verschlusssperre verschiedene Ausgestaltungen möglich sein.

So kann das Schließorgan ein Sperrelement an seiner Stirnfläche, insbesondere an seiner Stirnfläche, die in die Richtung weist, in der das Schließorgan in den Grundkörper eingesetzt wird, aufweisen.

Wenigstens eines der Sperrelemente kann durch eine Sicherungsfeder federbelastet sein, so dass durch die Wirkung der Sicherungsfeder die selbsttätige Aktivierung der Verschlusssperre ermöglicht wird.

Die Verschlusssperre kann als eine Rastanordnung ausgebildet sein, die in der Schließstellung, vorzugsweise ausschließlich in der Schließstellung, selbsttätig verrastet und die Betätigung des Verschlusses sperrt. Bei einer solchen Ausgestaltung können die Sperrelemente beispielsweise als Rastvorsprung und Rastaufnahme ausgestaltet sein, wobei bevorzugt der Rastvorsprung gegen die Wirkung einer Sicherungsfeder auslenkbar ist.

Die Sperrelemente, beispielsweise der Rastvorsprung und die Rastaufnahme, gelangen gemäß einer vorteilhaften Ausgestaltung nur bei einer vorbestimmten Relativposition in Eingriff miteinander, so dass eine Aktivierung der Verschlusssperre außerhalb der Schließstellung, wie oben bereits erläutert, ausgeschlossen ist.

Die Verschlusselemente halten, wenn sie sich im Eingriff miteinander befinden, das Schließorgan fest in der Aufnahme. Die Verschlusselemente können beispielsweise ein Innen- und ein Außengewinde, oder einen Bajonettverschluss bilden. Ein derartiger Verschluss ist durch eine Drehbewegung betätigbar.

Die drehbare Halterung der Aufnahme im Grundkörper senkt zum einen den Verschleiß des Schließorgans. Zum anderen verhindert die drehbare Anordnung der Aufnahme und insbesondere des gesamten Verschlusses am Grundkörper, dass der Verschluss belastet wird und sich öffnen kann, wenn das Schließorgan auf Drehung belastet wird.

Die Sperrelemente der Verschlusssperre können bei einer solchen Ausgestaltung des Verschlusses gemäß einer vorteilhaften Weiterbildung nur bei vorzugsweise einer einzigen vorbestimmten Stellung des Verschlusses miteinander in Eingriff gelangen bzw. verrasten, um eine Aktivierung der Verschlusssperre bei nicht vollständig erreichter Schließstellung zu verhindern. Diese vorbestimmte Stellung kann eine vorbestimmte relative Drehstellung, eine vorbestimmte Tiefe, beispielsweise Einschraubtiefe, oder eine Kombination von beiden sein.

Um unabsichtliches gleichzeitiges Lösen der Verschlusssperre und des Verschlusses zu verhindern, ist es von Vorteil, wenn die Verschlusssperre durch eine Bewegung in einer anderen Richtung gelöst wird als der Verschluss. Von Vorteil ist insbesondere, wenn der Verschluss durch eine Drehbewegung und die Verschlusssperre durch eine bevorzugt vornehmlich translatorische Bewegung senkrecht zu Drehbewegung lösbar ist. Bei dieser Maßnahme sind zwei unterschiedliche Bewegungen zum Entfernen des Schließorgans notwendig, was eine besonders hohe Sicherheit gegen ein versehentliches Entfernen darstellt.

Eine solche vorbestimmte Stellung kann beispielsweise durch ein Gewinde erreicht werden, das an seinem Umfang an einer Stelle unterbrochen ist, wobei die Unterbrechung des Gewindes eine Rastaufnahme für einen Rastvorsprung bildet. Der Rastvorsprung kann bei einer solchen Ausgestaltung mit der Aussparung nur in Eingriff gelangen, wenn neben der vorbestimmten Drehstellung auch eine bestimmte Einschraubtiefe erreicht ist. Ist die Einschraubtiefe noch nicht erreicht, gelangt der Rastvorsprung nicht in Überdeckung in der Ausnehmung, sondern liegt bevorzugt stirnseitig noch am Gewinde an.

Ist bei einer solchen Ausgestaltung ein Indikatororgan vorgesehen, kann es mit dem Rastvorsprung bewegungsübertragend gekoppelt sein, so dass es dessen Verrastung und damit die Schließstellung anzeigt.

Bei aktivierter Verschlusssperre kann insbesondere die relative Beweglichkeit der Verschlusselemente bzw. von Aufnahme und Schließorgan zumindest entgegen der Betätigungsrichtung des Verschlusses zueinander blockiert sein, so dass der Verschluss nicht gelöst werden kann.

In einer weiteren vorteilhaften Ausgestaltung kann die Aufnahme als separates Teil in einer Durchstecköffnung für das Schließorgan angeordnet sein. Handelt es sich beispielsweise bei dem Bauteil der Hebe-, Zurr- oder Anschlagtechnik um einen Schäkel oder ein schäkelförmiges Bauteil mit zwei die Öffnung begrenzenden Bügeln, in deren Enden das Schließorgan in einer Einführrichtung eingesteckt wird, kann die Aufnahme an einem dieser Bügel vorzugsweise drehbar angebracht sein.

Die Aufnahme kann in einer Ausgestaltung die Durchstecköffnung verlängern, vorzugsweise in Durchsteckrichtung in einer von der Öffnung des Grundkörpers weg weisenden Richtung, wodurch eine größere Auflagefläche für das Schließorgan geschaffen wird. Die größere Auflage führt zu einer geringeren Flächenpressung und folglich zu einer höheren Verschleißfestigkeit und Belastbarkeit des Bauteils.

An ihrem Umfang kann die Aufnahme mit Formschlusselementen für Werkzeuge sowie zum Greifen mit der Hand versehen sein, beispielsweise mit einer polygonalen Außenkontur. Die Aufnahme kann als rohrförmiger oder mutternförmiger Hohlkörper ausgestaltet sein. Ferner kann die Aufnahme zum Einschrauben des Schließorgans mit einem Innengewinde versehen sein. Die Aufnahme kann auch kappenförmig ausgestaltet sein, so dass sie die Durchstecköffnung zumindest teilweise verschließt.

Das Greiforgan dient zum Lösen der Verschlusssperre, so dass der Verschluss wieder betätigbar ist. Das Greiforgan ist dabei bevorzugt drehbar relativ zum Grundkörper gehaltert, wobei insbesondere die Verschlusssperre in Drehrichtung bewegungsstarr mit dem Verschluss gekoppelt sein kann, so dass sich Verschluss und Verschlusssperre einstückig miteinander drehen können. Durch diese Maßnahme ist sichergestellt, dass auch die Verschlusssperre bei einer Drehbelastung des Schließorgans kraftfrei bleibt und nicht verschleißt oder bei zu hoher Belastung des Schließorgans versagt.

Das Greiforgan kann in einer weiteren Ausgestaltung in der Aufnahme relativ zu dieser beweglich, insbesondere geradlinig oder schwenkbar beweglich, gehaltert sein. Diese Ausgestaltung führt zu einer konstruktiv einfachen Lösung, denn das Greiforgan dreht sich mit der Aufnahme und mit dem Verschluss einstückig mit. Bevorzugt ist die Richtung, in der das Greiforgan betätigt wird, von der Richtung, in der der Verschluss betätigt wird, entkoppelt. Wird beispielsweise der Verschluss durch eine Drehbewegung betätigt, so wird zum Lösen der Verschlusssperre bevorzugt das Greiforgan in einer Richtung parallel zur Drehachse, also senkrecht zur Drehbewegung des Verschlusses translatorisch bewegt oder umgekehrt.

Eine unmittelbare Betätigung der Verschlusssperre durch das Greiforgan ist möglich, wenn gemäß einer weiteren vorteilhaften Ausgestaltung das Greiforgan mit einem Sperrelement der Verschlusssperre monolithisch verbunden ist.

Das Greiforgan kann in einer weiteren vorteilhaften Ausgestaltung einen Verschlussdeckel für eine das Schließorgan aufnehmende Aufnahmeöffnung des Grundkörpers und/oder der Aufnahme bilden, so dass Verschmutzungen von der Aufnahme bzw. der Aufnahmeöffnung ferngehalten werden.

Im Greiforgan kann eine Öffnung vorgesehen sein, durch die das Indikatororgan ragt. Ist das Greiforgan gleichzeitig das Abdeckelement für das Indikatororgan, so kann die Öffnung von einem vorspringenden Ring umgeben sein, der in der Abdeckstellung das Indikatororgan abdeckt.

Zur leichteren Handhabung kann das Greiforgan zwei sich diametral gegenüberliegende Handhabungsflächen aufweisen, so dass das Greiforgan mittels eines Zangengriffs mit nur einer Hand ergriffen werden kann. Die Handhabungsflächen können an einer Umfangsfläche der Aufnahme liegen. Das Greiforgan kann federgespannt sein, so dass es nur gegen die Wirkung der Federkraft betätigt werden kann. Dient das Greiforgan gleichzeitig als Rastelement der Verschlusssperre, so kann diese Feder gleichzeitig zur Herstellung der Verrastung in der Schließstellung genutzt werden.

Das Greiforgan selbst kann in einer weiteren Ausgestaltung mit der Sicherungsfeder baulich vereint sein, so dass sich die Anzahl der notwendigen Teile verringert. Die Sicherungsfeder kann so direkt betätigt werden. Eine solche Ausgestaltung kann durch eine Blattfeder realisiert sein, deren eines Ende an der Aufnahme befestigt und deren anderes, aus Gründen der Ergonomie bevorzugt als Sicherungsfeder umgebogenes Ende als Greiforgan dient und aus der Aufnahme ragt.

Um die Anzahl der Teile weiter zu verringern, kann zudem die Sicherungsfeder selbst das Abdeckorgan bilden. Die Sicherungsfeder kann dabei einen scheibenförmigen Bereich mit einem Durchlass für das Indikatororgan aufweisen. Solange die Sicherungsfeder ausgelenkt und somit die Schließstellung nicht sicher erreicht ist, deckt der scheibenförmige Bereich das Indikatororgan ab.

Gemäß einer weiteren vorteilhaften Ausgestaltung kann das Bauteil mit einem Sicherungsgesperre versehen sein, durch das das Schließorgan bei geöffnetem Durchlass am Grundkörper gesichert ist. Das Sicherungsgesperre lässt sich nur durch Aufbringen einer zusätzlichen Kraft überwinden, so dass das Schließorgan bei geöffnetem Durchlass verliersicher gehaltert ist. Selbstverständlich kann anstelle des Sicherungsgesperres auch eine Verrastung vorgesehen sein. Diese führt zwar zu einer stärkeren Sicherung des Schließorgans, aber andererseits auch zu einer aufwändigeren Betätigung, was insbesondere dann von Nachteil ist, wenn die Öffnung des Grundkörpers schnell einhändig verschlossen werden muss.

Durch das Sicherungsgesperre wird vermieden, dass das Schließorgan vom Grundkörper abfallen kann, wenn der Verschluss geöffnet ist. Gerade bei Outdoor- und Offshore-Anwendungen, bei denen die Bauteile der Hebe-, Zurr- oder Anschlagtechnik nicht selten in großer Höhe über dem Boden verwendet werden, wie beispielsweise auf Masten oder Kranen, kann ein herabfallendes Schließorgan erhebliche Verletzungen bei dem Personal auf dem Boden hervorrufen.

Das Sicherungsgesperre kann eine das Schließorgan zumindest teilweise umfassende Feder und eine Nut, in die die Feder eingreift, aufweisen. Die Feder kann beispielsweise fest am Grundkörper oder Schließorgan angebracht sein und einen polygonalen Umriss haben, der eine kleinere lichte Weite als das Schließorgan oder die Durchstecköffnung aufweist. Die Nut kann am Schließorgan, beispielsweise bei einem Schließbolzen als Schließorgan weniger als einen Durchmesser von einem Verschlusselement des Schließorgans, wie einem Außengewinde entfernt sein.

Handelt es sich bei dem Bauteil um einen Schäkel oder ein schäkelähnliches Bauteil mit zwei Bügeln, durch die das Schließorgan gesteckt werden muss, befindet sich das Gesperre gemäß einer weiteren vorteilhaften Ausgestaltung an dem einen und der Verschluss an dem anderen Bügel.

Das Bauteil der Hebe-, Zurr- oder Anschlagtechnik in einer oben beschriebenen Ausgestaltungen kann auch als integraler Bestandteil eines anderen Geräts der Hebe-, Zurr- oder Anschlagtechnik, wie Verkürzem oder Spannern ausgestaltet sein.

Im Folgenden ist die Erfindung anhand von Ausführungsbeispielen mit Bezug auf die beigefügten Figuren exemplarisch näher erläutert. Der Einfachheit halber sind in den Figuren und in der nachstehenden Beschreibung der Ausführungsbeispiele Elemente, die einander hinsichtlich Funktion und/oder Aufbau entsprechen, mit denselben Bezugszeichen versehen. Ferner ist, soweit nicht anders ausdrücklich angegeben, bei den weiteren Ausführungsbeispielen stets nur auf die Unterschiede zu vorangegangenen Ausführungsbeispielen eingegangen.

Nach Maßgabe der obigen Ausführungen zu den einzelnen, jeweils für sich vorteilhaften Ausgestaltungen können die bei den einzelnen Ausführungsbeispielen unterschiedlichen Merkmale miteinander kombiniert werden. Auch können nach Maßgabe der obigen Ausführungen einzelne Merkmale weggelassen werden, sofern es nicht auf den mit diesem Merkmal verknüpften Vorteil ankommt.

Es zeigen:
- Fig. 1: ein erstes Ausführungsbeispiel in einer schematischen, perspektivischen Explosions-darstellung;
- Fig. 2: ein Schließorgan des Ausführungsbeispiels der Fig. 1 in einer schematischen Perspektivdarstellung;
- Fig. 3: ein Greiforgan des Ausführungsbeispiels der Fig. 1 in einer schematischen Perspektivdarstellung;
- Fig. 4: das Ausführungsbeispiel der Fig. 1 in einer schematischen Perspektivdarstellung einer Offenstellung;
- Fig. 5: das Ausführungsbeispiel der Fig. 1 in einer schematischen Perspektivdarstellung kurz vor Erreichen einer Schließstellung;
- Fig. 6: ein Detail der Fig. 5;
- Fig. 7: das Ausführungsbeispiel der Fig. 1 in einer schematischen Perspektivdarstellung in der Schließstellung;
- Fig. 8: ein Detail der Fig. 7;
- Fig. 9: das Ausführungsbeispiel der Fig. 1 in einer schematischen Schnittdarstellung der Schließstellung;
- Fig. 10: ein weiteres Ausführungsbeispiel der Erfindung in einer schematischen Perspektivdarstellung einer Offenstellung;
- Fig. 11: das Ausführungsbeispiel der Fig. 10 in einer schematischen Perspektivdarstellung der Schließstellung;
- Fig. 12: ein Detail der Fig. 11;
- Fig. 13: ein weiteres Ausführungsbeispiel der Erfindung in einer schematischen Darstellung der Schließstellung;
- Fig. 14: ein weiteres Ausführungsbeispiel der Erfindung in einer schematischen, perspektivischen Explosionsdarstellung;
- Fig. 15: ein Detail des Ausführungsbeispiels der Fig. 14 in einer schematischen Perspektivdarstellung;
- Fig. 16: ein weiteres Ausführungsbeispiel eines Bauteils der Hebe-, Zurr- oder Anschlagtechnik.

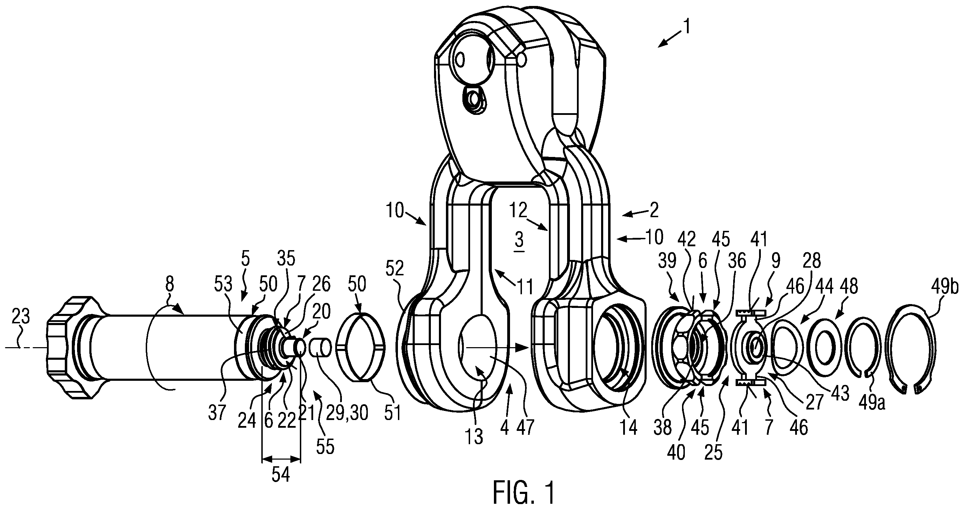

Fig. 1 zeigt in einer schematischen Explosionsdarstellung exemplarisch die Bestandteile einer möglichen Ausführungsform eines erfindungsgemäßen Bauteils 1 der Hebe-, Zurr- oder Anschlagtechnik. Das Bauteil 1 wird zum Heben von Lasten, zum Festzurren von zu transportierenden Lasten oder zum Anschlagen von Hebemitteln in Outdoor- und Offshore-Einsatz wie eingangs erläutert verwendet.

Das Bauteil 1 weist einen Grundkörper 2 auf, der eine Öffnung 3 bildet. In die Öffnung 3 kann eine Last, ein Hebemittel oder ein Anschlagmittel eingehängt werden.

Die Öffnung 3 weist wenigstens einen Durchlass 4 auf, durch den hindurch das (nicht dargestellte) Hebe-, Zurr- oder Anschlagmittel in die Öffnung 3 eingeführt werden kann. Der Durchlass 4 ist durch ein Schließorgan 5 sicher verschließbar. Ist die Öffnung 3 bzw. der Durchlass 4 sicher verschlossen, befindet sich das Schließorgan 5 in einer Schließstellung (nicht dargestellt).

Um das Schließorgan 5 in der Schließstellung zu sichern, sind ein Verschluss 6 und eine Verschlusssperre 7 vorgesehen.

Durch den Verschluss 6 wird das Schließorgan 5 in der Schließstellung gesichert, so dass es auch unter Last nicht abfallen kann.

Um den Verschluss 6 kraftfrei zu halten, wenn Torsions- bzw. Drehkräfte 8 auf das Schließorgan 5 einwirken, und um das Schließorgan 5 im Betrieb gleichmäßig über den gesamten Umfang abzunutzen, ist das Schließorgan 5 in der Schließstellung gegenüber dem Grundkörper 2 drehbar durch den Verschluss 6 gehalten.

Die Verschlusssperre 7 wird selbsttätig aktiviert, wenn das Schließorgan 5 die Schließstellung erreicht. Durch die Verschlusssperre 7 ist der Verschluss 6 blockiert und kann nicht betätigt werden.

Zum Öffnen des Verschlusses 6 muss zunächst die Verschlusssperre 7 betätigt werden. Damit dies bei den für Outdoor- oder Offshore-Anwendungen typischen Umweltbedingungen für Bedienpersonal auch beispielsweise mit Handschuhen gut möglich ist, ist ein von Hand werkzeugfrei betätigbar ausgestaltetes Greiforgan 9 vorgesehen. Wird das Greiforgan 9 betätigt, lässt sich die Verschlusssperre 7 lösen und, nach dem Öffnen des Verschlusses, das Schließorgan 5 aus dem Durchlass 4 bewegen, um die Öffnung 3 freizugeben.

Lediglich beispielhaft ist in Fig. 1 ein schäkelförmiges Bauteil 1 dargestellt. Bei einem solchen schäkelförmigen Bauteil 1 umfassen zwei Bügel 10 die Öffnung 3 an zwei sich gegenüberliegenden Seiten 11, 12 der Öffnung 3. Der Durchlass 4 befindet sich beispielsweise an den Enden der Bügel 10, wo sich bevorzugt zwei miteinander fluchtende Durchstecköffnungen 13, 14 befinden, in die das bei einem schäkelförmigen Bauteil 1 meist bolzenförmige Schließorgan 5 zum Verschließen des Durchlasses 4 eingeführt wird. Das Schließorgan 5 kann die Bügel 10 aber auch an anderer Stelle als an ihren Enden durchdringen.

Das Bauteil 1 kann ein Indikatororgan 20 aufweisen, das entweder bei aktivierter Verschlusssperre 7 von außerhalb des Bauteils 1 erkennbar und bei nicht aktivierter Verschlusssperre 7 verdeckt, oder bei nicht aktivierter Verschlusssperre 7 von außerhalb des Bauteils 1 erkennbar und bei aktivierter Verschlusssperre 7 verdeckt angeordnet ist. Durch das Indikatororgan 20 ist folglich für einen Benutzer sofort zu erkennen, ob sich das Schließorgan 5 ordnungsgemäß in der Schließstellung befindet, entweder weil das Indikatororgan 20 nicht zu sehen ist oder, alternativ, weil das Indikatororgan 20 zu sehen ist.

Beim Ausführungsbeispiel der Fig. 1 ist das Indikatororgan 20 ein Stift 21, der sich an einer Stirnfläche 22 des lediglich beispielhaft bolzenförmigen Schließorgans 5 befindet. Verallgemeinert kann das Indikatororgan 20 in Richtung einer Längsachse 23 des Schließorgans 5 aus dem Schließorgan 5 vorkragen und jedwede Grundflächenform aufweisen.

Das Indikatororgan 20 muss nicht notwendigerweise am Schließorgan 5 angeordnet oder mit diesem bewegungsübertragend gekoppelt sein, sondern kann auch beispielsweise am Greiforgan 9 angeordnet oder mit diesem bewegungsübertragend gekoppelt sein. Es können auch zwei Indikatororgane 20 vorhanden sein (nicht gezeigt), von denen das eine ausschließlich vor Erreichen der Schließstellung und das andere ausschließlich nach Erreichen der Schließstellung sichtbar ist.

Um eine selbsttätige Aktivierung der Verschlusssperre 7 in der Schließstellung auf einfache technische Weise zu realisieren, kann die Verschlusssperre 7 eine Verrastung mit zwei miteinander verrastenden Sperrelementen aufweisen. Die Sperrelemente 24, 25 verrasten bevorzugt nur dann, wenn sich das Schließorgan 5 in der Schließstellung befindet. Das Indikatororgan 20 kann mit einem der Sperrelemente 24, 25 bewegungsübertragend verbunden sein, insbesondere über einen durch Urformen oder Umformen gebildeten Stoffschluss einstückig mit einem der Sperrelemente 24, 25 verbunden sein.

Sind zwei Indikatororgane 20 vorhanden, so kann jedes der Sperrelemente 24, 25 mit jeweils einem Indikatororgan bewegungsübertragend und/oder einstückig verbunden sein.

Bei dem in Fig. 1 dargestellten Bauteil 1 ist das eine Sperrelement 24 eine sektorförmige Aussparung 26 in einer Umfangsfläche des Schließorgans 5. Das stiftförmige Indikatororgan 20 ist monolithisch an der Stirnfläche 22 mit dem Schließorgan 5 verbunden und ist somit ortsfest zum Sperrelement 24. Das Indikatororgan 20 zeigt somit eine Lage des Sperrelements 24 an. Das andere Sperrelement 25 befindet bei dieser Ausgestaltung unmittelbar am Greiforgan 9, wie nachstehend noch erläutert ist.

Damit das Indikatororgan 20 entweder nur in der Schließstellung oder nur außerhalb der Schließstellung sichtbar ist, kann ein stationäres, bevorzugt aber ein in eine Überdeckung mit dem Indikatororgan 20 bewegliches Abdeckorgan 27 vorgesehen sein, das ebenfalls mit einem der Sperrelemente 24, 25 bewegungsübertragend verbunden sein kann. Bei dem dargestellten Ausführungsbeispiel ist das Abdeckorgan 27 ringförmig, wobei durch die zentrale Öffnung 28 des ringförmigen Abdeckorgans 27 das Indikatororgan 20 ragt. Das Indikatororgan 20 und das Abdeckorgan 27 sind relativ zueinander beweglich, so dass das Abdeckorgan 27 in Abhängigkeit von der relativen Lage der Sperrelemente 24, 25 in eine vollständige Überdeckung mit dem Indikatororgan 20 gebracht werden kann. Ist der Stift 21 vom Abdeckorgan 27 vollständig überdeckt, ist er nicht sichtbar.

Das Indikatororgan 20 kann mit einer Markierung 29 versehen sein, die sich farblich von ihrer Umgebung unterscheidet, so dass das Indikatororgan 20, wenn es vom Abdeckorgan 27 freigegeben ist, schon von Weitem deutlicher erkennbar ist. Die Markierung 29 kann in Form einer separaten Hülse 30 und/oder durch eine Beschichtung gebildet sein.

Das Abdeckorgan 27 kann, wie Fig. 1 zeigt, monolithisch durch Urformen oder Umformen mit dem Greiforgan 9 oder dem Sperrelement 25 verbunden sein. Eine bewegungsübertragende Kopplung zwischen dem Greiforgan 9 , dem Sperrelement 25 und dem Abdeckorgan 27 über Koppelglieder (nicht dargestellt) ist anstelle einer monolithischen Ausgestaltung ebenfalls möglich.

Die oben geschilderte Anordnung ist umkehrbar: Entweder befindet sich, wie dargestellt, das Indikatororgan 20 am Schließorgan 5 und das Abdeckorgan 27 am Greiforgan 9, oder aber das Indikatororgan 20 befindet sich am Greiforgan 9 und das Abdeckorgan 27 befindet sich am Schließorgan 5.

Der Verschluss 6 weist drehbar in Eingriff bringbare Verschlusselemente 35, 36 auf. Das eine Verschlusselement 35, beispielsweise in Form eines Außengewindes 37, befindet sich am Schließorgan 5. Das andere Verschlusselement 36, beispielsweise in Form eines Innengewindes 38, befindet sich an einer Aufnahme 39, die bevorzugt drehbar am Grundkörper 2 gehalten ist. Die Aufnahme 39 kann sich dabei zum Teil in einer Durchstecköffnung 14, insbesondere an deren von der Öffnung 3 bzw. dem Durchlass 4 abgewandten Seite, befinden.

Wenn die Aufnahme 39 die Durchstecköffnung 14 verlängert, entsteht eine größere Auflagefläche für das Schließorgan 5, so dass die Flächenpressung zwischen Schließorgan 5 und Grundkörper 2 bei hohen auf das Schließorgan 5 wirkenden Lasten verringert ist. Die Aufnahme 39 kann, wie Fig. 1 zeigt, hülsen- bzw. mutternförmig ausgestaltet sein und im montierten Zustand vom Grundkörper 2 weg vorspringen bzw. aus dem Grundkörper 2 ragen. An ihrem einen Ende kann die Aufnahme 39 Formschlusselemente 40 am Außenumfang aufweisen, die eine Handhabung, insbesondere Drehung der Aufnahme mittels eines Werkzeugs oder von Hand, ermöglicht.

Das Greiforgan 9 ist in der Aufnahme 39 geradlinig beweglich geführt, bevorzugt parallel zur Drehachse der Drehbewegung, mit der der Verschluss 6 betätigt wird. Zwei sich diametral gegenüberliegende Handhabungsflächen 41 des Greiforgans 9 liegen bevorzugt außen an einer Umfangsfläche 42 der Aufnahme 39, bevorzugt im Bereich der Formschlusselemente 40, und sind von außen zugänglich. Die Aufnahme 39 kann Vorsprünge oder Rippen an wenigstens einer Seite des Greiforgans 9 aufweisen, um dieses zu schützen. Durch die Lage der Handhabungsflächen 41 im Bereich der Formschlusselemente 40 ist gleichzeitig eine Bewegung des Greiforgans 9 und damit des mit dem Greiforgan 9 verbundenen Sperrelements 25 und eine Drehung der Aufnahme 39 zur Betätigung des Verschlusselements 36 mit nur einer Hand möglich. Somit können gleichzeitig mit nur einer Hand die Verschlusssperre 7 und der Verschluss 6 betätigt werden.

Das Greiforgan 9 bildet einen Verschlussdeckel, der, in diesem Fall zusammen mit dem durch die zentrale Öffnung 28 ragenden Stift 21, die Durchstecköffnung 14 und die von dem Innenraum 43 der Aufnahme 39 gebildeten Verlängerung der Durchstecköffnung 14 verschließt.

Das Greiforgan 9 ist durch eine Sicherungsfeder 44 in eine Ruheposition gedrückt, beim Ausführungsbeispiel der Fig. 1 in Richtung zur Öffnung 3 bzw. zu dem Durchlass 4. Zwei in Schlitzen 45 der Aufnahme 39 geführte Ausleger 46 des Greiforgans 9, an deren äußeren Enden sich die Handhabungsflächen 41 befinden, bilden die Führung des Greiforgans 9. Das Greiforgan 9 ist relativ zur Aufnahme 39 entlang der Längsachse 23 des Schließorgans 5, d. h. in und entgegen dessen Durchsteckrichtung beweglich. In Richtung weg von der Öffnung 3 muss die Kraft der Sicherungsfeder 44 überwunden werden. Die Sicherungsfeder 44 kann eine wellenförmige Ringfeder 51 sein, die sich an ihrer dem Greiforgan 9 gegenüberliegenden Seite an einem Stützring 48 abstützt. Das Greiforgan 9, die Sicherungsfeder 44 und der Stützring 48 sind mittels eines Spreng- oder Seegerringes 49a in der Aufnahme 39 gesichert.

Die Aufnahme 39 selbst ist mittels eines weiteren Spreng- oder Seegerringes 49b im Grundkörper 2 bzw. dessen Durchstecköffnung 14 drehbar gesichert.

Das Bauteil 1 kann schließlich noch ein Sicherungsgesperre 50 aufweisen, das das Schließorgan 5 in einer Offenstellung, bei vollständig freigegebenen Durchlass 4 am Grundkörper 2 unverlierbar hält.

Das Sicherungsgesperre 50 ist durch Aufbringen einer erhöhten Kraft überwindbar und stellt lediglich eine Art kraftschlüssige Zwischenrastung dar, um zu verhindern, dass bei offenem Verschluss 6 das Schließorgan 5 vom Grundkörper 2 abfallen kann. Es erleichtert die Handhabung des Bauteils 1, weil das Schließorgan 5 bei offenem Durchlass 4 nicht vom Benutzer gehalten oder gesichert werden muss.

Das Sicherungsgesperre 50 weist eine Ringfeder 51 auf, die beispielsweise am Grundkörper 2, in der Durchstecköffnung 13 oder an einem die Durchstecköffnung 13 nach außen hin, weg vom Durchlass 4 verlängernden Ringkragen 52 befestigt ist. Der Ringkragen 52 kann, wie gezeigt, integraler Bestandteil des Grundkörpers 2 oder ein separates, am Grundkörper 2 befestigtes Teil sein. Die Ringfeder 51 weist einen annähernd polygonalen Außenumfang mit einer lichten Weite auf, die geringer ist als der durch die Durchstecköffnung 13 bei der Überführung in die Schließstellung durchzusteckende Abschnitt des Schließorgans 5. Am Schließorgan 5 kann eine Nut 53 angeordnet sein, in die die Ringfeder 51 einschnappt. Die Nut 53 befindet sich bevorzugt in einem Abstand 54 vom Ende 55 des Schließorgans 5, der dem Abstand zwischen der Ringfeder 51 und dem Durchlass 4 entspricht, so dass bei eingerastetem Sicherungsgesperre 50 weder das Ende 55 des Schließorgans 5 noch das Indikatororgan 20 aus der Durchstecköffnung 13 heraus in die Öffnung 3 hineinragt.

Somit kann ein Hebe-, Anschlag- oder Zurrmittel (nicht dargestellt) beim Einführen in die Öffnung 3 durch den Durchlass 4 hindurch weder das Ende 55 des Schließorgans 5, noch das Indikatororgan 20 berühren, an diesem hängenbleiben oder es gar beschädigen.

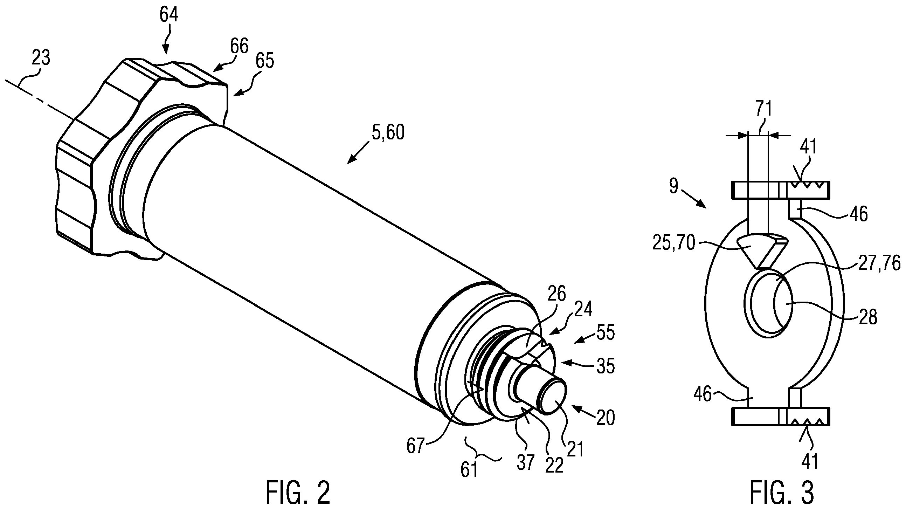

In Fig. 2 ist beispielhaft ein Schließorgan 5 dargestellt, hier in der Form eines Schließbolzens 60.

Das Schließorgan 5 ist in einem Bereich 61, beispielsweise dem Ende 55, mit dem Verschlusselement 35 in Form eines Außengewindes 37 versehen. Das Außengewinde 37 hat einen kleineren Außendurchmesser als der übrige, hier lediglich beispielhaft kreiszylindrische Körper 63 des Schließorgans 5. An dem dem Ende 55 gegenüberliegenden Ende 64 des Schließorgans befindet sich ein Kopf 65, dessen Umfangsfläche mit Formschluss- und Greifelementen 66 versehen ist, um den Kopf 65 sowohl mit Werkzeugen als auch von Hand fixieren oder drehen zu können.

Das Verschlusselement 35 springt vom Körper 63 unter Bildung eines Flanschabsatzes vor und erstreckt sich bis zur Stirnfläche 22. Anstelle eines Außengewindes 37 kann auch ein Bajonettverschluss oder ein anderes, durch Drehung herzustellendes Verschlusselement 35 vorgesehen sein. Das grundkörperseitige Verschlusselement 36 ist komplementär zu dem Verschlusselement 35 ausgestaltet.

Im Bereich 61 ist ferner das Sperrelement 24 der Verschlusssperre 7 angeordnet, das als eine insbesondere sektorförmige Aussparung 26 in einer Umfangsfläche 67 und/oder einer Stirnfläche 22 des Verschlusselements 35 vorgesehen ist. Die Aussparung 26 dient zur Aufnahme eines vorzugsweise federbelasteten Rastvorsprungs (nicht dargestellt), der in einer vorbestimmten Einschraubtiefe und/oder einer vorbestimmten relativen Drehstellung des Schließorgans 5 in die Aussparung 26 einrastet.

Es ist von Vorteil, wenn bei der Verwendung gewindeförmiger Verschlusselemente 35, 36 der Gewindeanschnitt an einer vorbestimmten Winkelposition relativ zur Aussparung 26 liegt, so dass stets dieselbe Beziehung zwischen der Einschraubtiefe und der Drehstellung des Schließorgans besteht.

Von der Stirnfläche 22 des Verschlusselements 35 weg erstreckt sich in Richtung der Längsachse 23 des Schließorgans 5 das hier lediglich beispielhaft stiftförmige Indikatororgan 20.

Fig. 3 zeigt ein Ausführungsbeispiel eines Greiforgans 9, wobei die der Öffnung 3 bzw. dem Schließorgan 5 zugewandte Seite zu sehen ist. Auf dieser Seite befindet sich das als Rastvorsprung 70 ausgestaltete Sperrelement 25, das so ausgestaltet ist, dass es in die Aussparung 26 am Schließorgan 5 einfahren kann. Das Sperrelement 25 ist komplementär zum Sperrelement 24 ausgestaltet, so dass beide möglichst wenig Spiel zulassen, wenn sie sich im Eingriff miteinander befinden. Das Sperrelement 25 kann demnach als sektorförmiger Vorsprung ausgebildet sein.

Beim Eindrehen des Schließorgans 5 in die Aufnahme 39 (Fig. 1) dreht sich die Aussparung 26 relativ zum Rastvorsprung 70. Das Greiforgan 5 ist aufgrund der Ausleger 46 in den Schlitzen 45 (Fig. 1) unverdrehbar und nur in Richtung der Längsachse 23 (Fig. 1) relativ zur Aufnahme 39 (Fig. 1) verschieblich. Wenn die Stirnfläche 22 des Verschlusselements 35 während des Eindrehens des Schließorgans 5 in die Aufnahme 39 (Fig. 1) gegen den Rastvorsprung 70 drückt, wird das Greiforgan 9 gegen die Wirkung der Sicherungsfeder 44 (Fig. 1) entlang der Längsachse 23 (Fig. 1) in Richtung weg vom Durchlass 4 (Fig. 1) zusammen mit der Axialbewegung des Schließorgans 5 geradlinig ausgelenkt. In dem Moment, in dem die Aussparung 26 (Fig. 2) und der Rastvorsprung 70 miteinander fluchten, schnappt der Rastvorsprung 70 in die Aussparung 26 und die Verschlusssperre 7 (Fig. 1) ist aktiviert. Der Verschluss 6 kann nicht mehr betätigt werden, weil die relative Drehbewegung zwischen der Aufnahme 39 und dem Schließorgan 5 durch den Eingriff der Sperrelemente 24, 25 blockiert ist. Die Höhe 71 des Rastvorsprungs 70 ist dabei so bemessen, dass eine Verrastung vor Erreichen einer vorbestimmten Einschraubtiefe nicht möglich ist. Bevorzugt beträgt die Höhe 71 höchstens eine Steigung des Außengewindes 37 am Schließkörper.

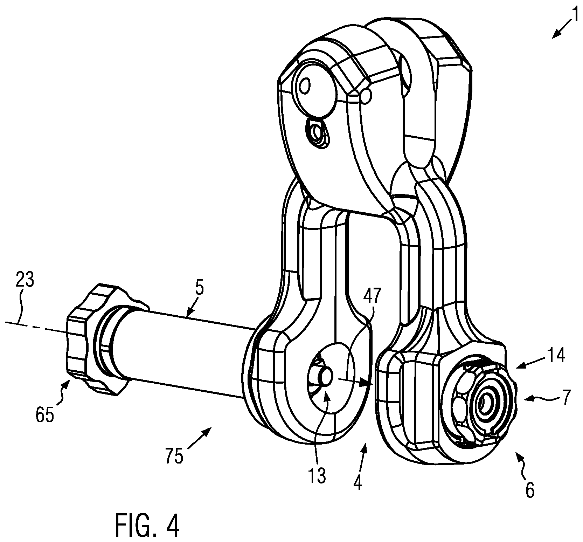

Im Folgenden ist anhand der Fig. 4 bis 9 die Funktion des Bauteils 1 näher erläutert. In diesen Figuren ist der Übersichtlichkeit halber der Grundkörper 2 nur gestrichelt in Umrissen dargestellt und die Aufnahme 39 weggelassen. Außerdem sind die von dem Durchlass 4 aus betrachtet jenseits des Greiforgans 9 liegenden Ringe zum Teil weggelassen.

Fig. 4 zeigt die Offenstellung 75, in der das Schließorgan 5 den Durchlass 4 vollständig freigibt und bevorzugt durch das Sicherungsgesperre 50 gehalten ist. Das Schließorgan 5 ragt in der Offenstellung 75 bevorzugt nicht in den Durchlass 4 hinein, so dass sich beim Einführen von Gegenständen durch den Durchlass 4 nichts am Schließorgan 5 verhaken kann.

Soll ausgehend von der Offenstellung 75 nun der Durchlass 4 mit dem Schließorgan 5 verschlossen werden, so wird zunächst das Schließorgan 5 ausgehend von der Offenstellung 75 in den Durchlass 4 geschoben. Dabei muss zunächst die Haltekraft des Sicherungsgesperres 50 überwunden werden. Diese Kraft ist so bemessen, dass sie von Hand überwunden werden kann, beispielsweise indem die Handfläche eines Benutzers in Durchsteckrichtung 47 gegen den Kopf 65 drückt oder schlägt.

Die Durchstecköffnung 13, die das Schließorgan 5 in der Offenstellung 75 hält, ist gegenüber dem Schließorgan 5 relativ eng toleriert, so dass dieses dreh- und gleitverschieblich mit nur geringem Spiel in seiner Längsachse 23 geführt ist. Der Benutzer muss also das Schließorgan 5 nicht ausrichten, um es in die bezüglich des Durchlasses 4 gegenüberliegende Durchstecköffnung 14 einzustecken. Dies geschieht aufgrund der engen Tolerierung und der Ausrichtung der Durchstecköffnung 13 mit der gegenüberliegenden Durchstecköffnung 14 von selbst.

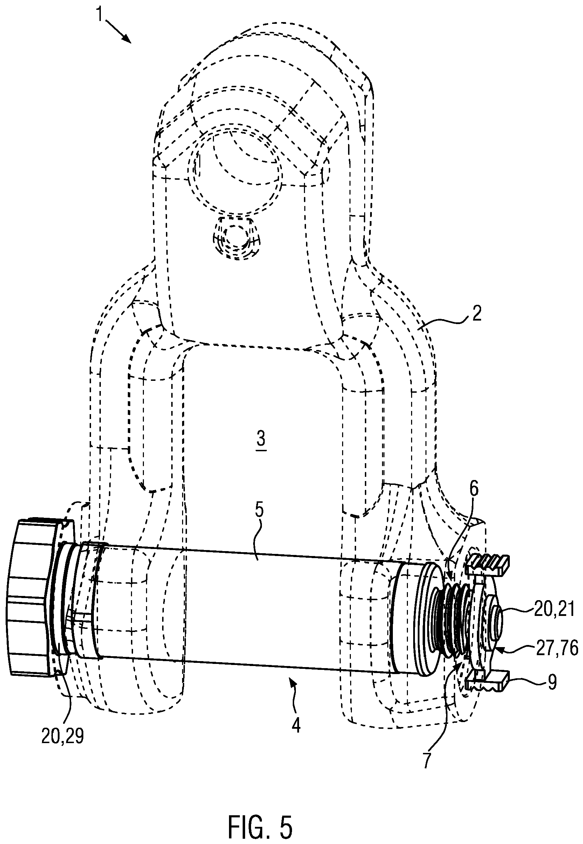

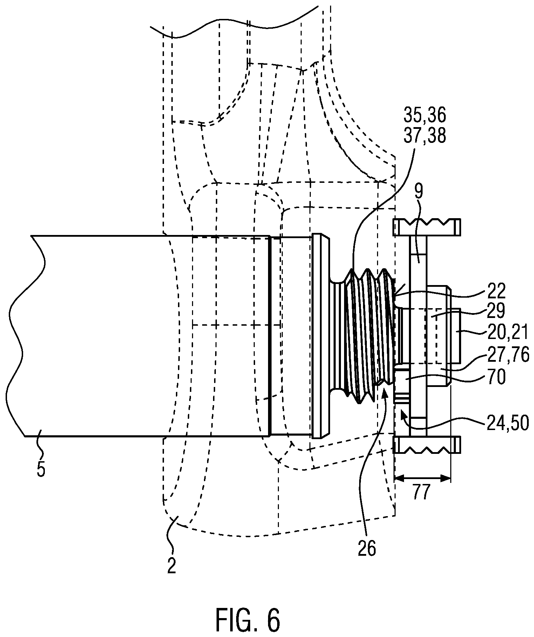

Ist das Schließorgan 5 in die Durchstecköffnung 14 eingesteckt, treffen die Verschlusselemente 35, 36 (Fig. 1) zunächst aufeinander, ohne sich im Eingriff miteinander zu befinden. Anschließend kann der Verschluss 6 betätigt werden, indem beispielsweise beim dargestellten Ausführungsbeispiel das Schließorgan 5 in die Aufnahme 39 geschraubt wird, wenn die Verschlusselemente 35, 36 gewindeförmig sind. Der Durchlass 4 ist dann bereits zwar verschlossen, die Schließstellung ist jedoch noch nicht erreicht, weil weder der Verschluss 6 geschlossen, noch die Verschlusssperre 7 aktiviert ist. Dieser Zustand ist in Fig. 5 und im Detail in Fig. 6 dargestellt. Die Sperrelemente 24, 25 der Verschlusssperre 7 müssen sich in dieser Stellung noch nicht berühren.

Treffen das Außengewinde 37 und das Innengewinde 38 aufeinander, so gelangen sie aufgrund des hinsichtlich seiner Winkellage vorbestimmten Gewindeanschnittes nur miteinander in Eingriff, wenn sich die drehbare Aufnahme 39 und das Schließorgan 5 in einer vorbestimmten Winkelstellung zueinander befinden. Im Folgenden ist lediglich beispielhaft erläutert, dass nach zwei Umdrehungen die Schließstellung erreicht wird.

Bevorzugt ist der Rastvorsprung 70 eine Gewindesteigung vom vorderen Ende des Gewindeabschnitts in Einschraubrichtung beabstandet, wenn die Verschlusselemente 35, 36 gerade in Eingriff gelangen. Das Schließorgan 5 wird eine Umdrehung in die Aufnahme 39 eingeschraubt, bevor sich die Stirnfläche 22 des Verschlusselements 35 und der Rastvorsprung 71 berühren. Bevorzugt hat in diesem Fall die Aussparung 26 den Rastvorsprung 71 gerade passiert. Bei der weiteren Drehbewegung wird die Stirnfläche 22 des Verschlusselements 35 gegen die Wirkung der Sicherungsfeder 44eingeschraubt. Nachdem die Höhe 71 (Fig. 3) des Rastvorsprungs 70 eine Gewindesteigung beträgt, schnappt der Rastvorsprung 70 nach einer weiteren vollständigen Umdrehung in die Aussparung 26. Nun ist die Schließstellung erreicht.

Natürlich können mit gegenüber dem Ausführungsbeispiel veränderten Gewindeanschnitten und einer entsprechend dazu veränderten Höhe des Rastvorsprunges auch mehr oder weniger Umdrehungen, auch eine nicht ganzzahlige Anzahl von Umdrehungen des Verschlusses notwendig sein, um die Verschlusssperre zu aktivieren.

Bis zum Erreichen der Schließstellung ist das Indikatororgan 20 durch das Abdeckorgan 27, das hier vom Greiforgan 9 gebildet ist, verdeckt. Wenn die Verschlusselemente 35, 36 gerade miteinander in Eingriff gelangen, taucht das Indikatororgan, der Stift 21, noch nicht oder nur unvollständig in das Greiforgan 9 ein und bleibt abgedeckt. Beim weiteren Einschrauben dringt der Stift 21 tiefer in die zentrale Öffnung 28 des Abdeckorgans 27 ein, ist aber nicht zu sehen, weil er, beispielsweise durch eine ringförmige Wulst oder einen Kragen 76 des Greiforgans 9, abgedeckt ist. Die Höhe 77 des Abdeckorgans 27 vom Rastvorsprung 70 bis zum Ende der ringförmigen Wulst 76 ist bevorzugt kleiner als der Abstand vom Grund der Aussparung 26 bis zum Ende des Stiftes 21. Somit bleibt der Stift 21 solange abgedeckt, wie die Stirnfläche 22 des Verschlusselements 35 gegen den Rastvorsprung 70 drückt. Wenn der Rastvorsprung 70 durch die Sicherungsfeder 44 in die Aussparung 26 schnappt, ragt der Stift 21 mit seinem freien Ende aus dem Abdeckorgan 27 und ist von außen erkennbar. Außerdem ist die Markierung 29 zu sehen. Beispielsweise kann der Stift 21 mit einer grünen Markierung 29 versehen sein, die einem Benutzer, wenn sie sichtbar ist, signalisiert, dass die Schließstellung korrekt eingenommen ist, weil Verschluss 6 und Verschlusssperre 7 aktiviert sind.

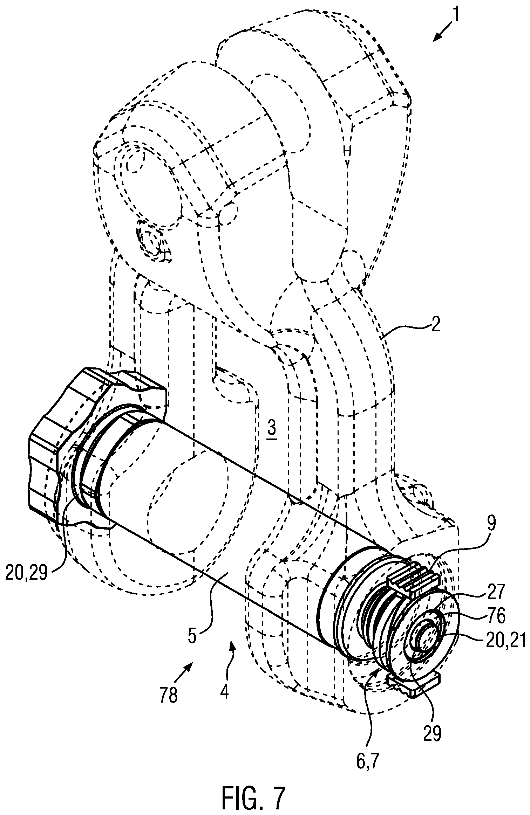

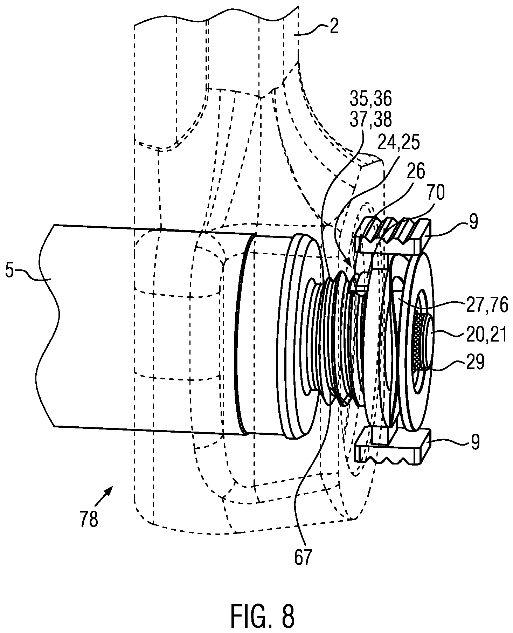

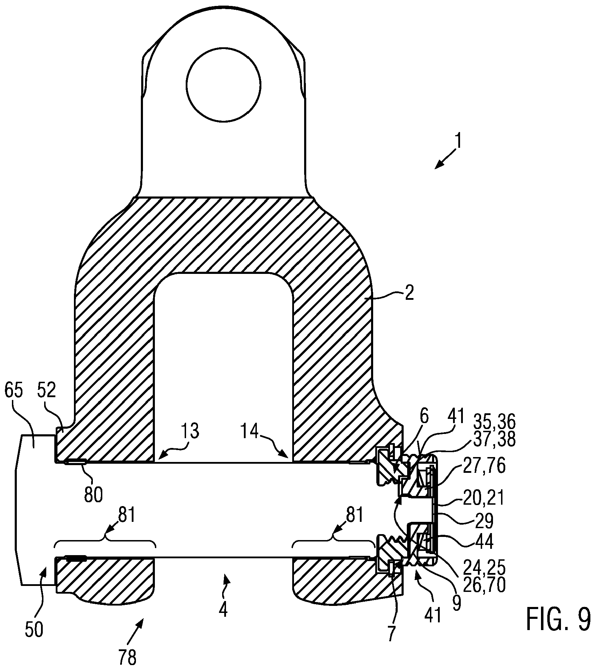

Die Schließstellung 78 ist in Fig. 7 und im Detail in Fig. 8 zu sehen. Wie erläutert, befinden sich die Verschlusselemente 35, 36 vollständig in Eingriff, beispielsweise indem das Außengewinde 37 und das Innengewinde 38 über zwei Umdrehungen miteinander verschraubt sind, und weil die Verschlusssperre 7 aktiviert ist, indem die Sperrelemente 24, 25 miteinander verrastet sind. Das Indikatororgan 20 ist von außen erkennbar. Dies ist im Schnitt noch einmal in Fig. 9 zu erkennen.

Zur weiteren Sicherung kann, wie in Fig. 9 gezeigt ist, das Sicherungsgesperre 50 über eine weitere Nut 80 in der Nähe des Kopfes 75 in der Schließstellung 78 das Schließorgan 5 zusätzlich zum Verschluss 6 halten. Dadurch kann ein eventuelles axiales Spiel des Schließorgans 5 verringert werden.

Zu sehen ist in Fig. 9 ebenfalls, dass aufgrund des außen an die Durchstecköffnung 13 angesetzten Ringes 52 und der außen an die Durchstecköffnung 14 angesetzten Aufnahme 39 die Durchstecköffnungen 13, 14 große Tragflächen 81 bereitstellen können, die hohe Lasten bei geringen Flächenpressungen aufnehmen.

Zum Öffnen des Durchlasses 4 wird das Greiforgan 9 an den sich gegenüberliegenden Handhabungsflächen 41 ergriffen und gegen die Wirkung der Sicherungsfeder 44 vom Grundkörper 2 entlang der Längsachse des Schließorgans 23 weg bewegt. Die Sperrelemente 24, 25 gelangen so außer Eingriff und die Verschlusssperre 7 wird deaktiviert. Der Benutzer kann nunmehr in einer Bewegung von Hand über die Handhabungsflächen 41 die Aufnahme 39 drehen, wenn er gleichzeitig mit der anderen Hand den Kopf 65 des Schließorgans festhält. Damit löst er den Verschluss 6. Ist der Verschluss 6 vollständig gelöst, kann er das Schließorgan 5 herausziehen, bis es durch das Sicherungsgesperre 50 in der Offenstellung 75 gehalten ist.

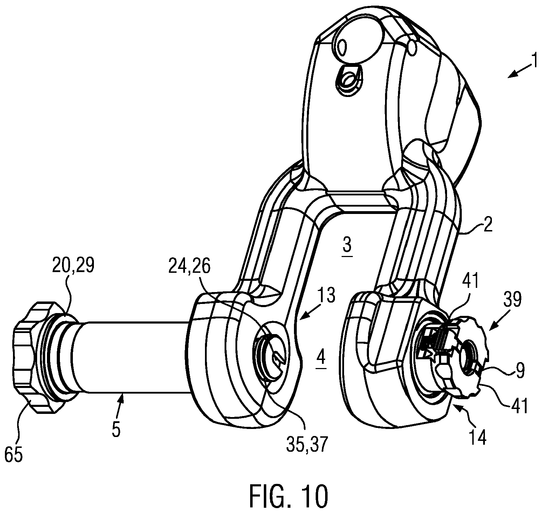

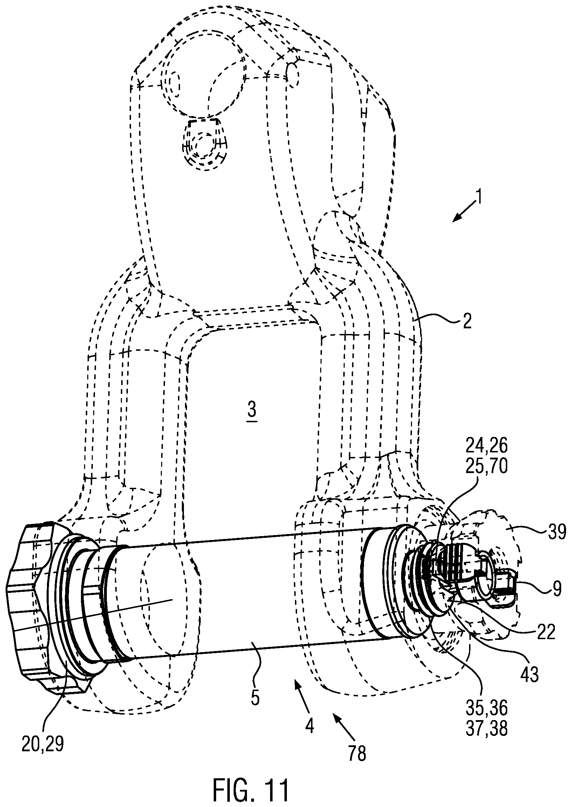

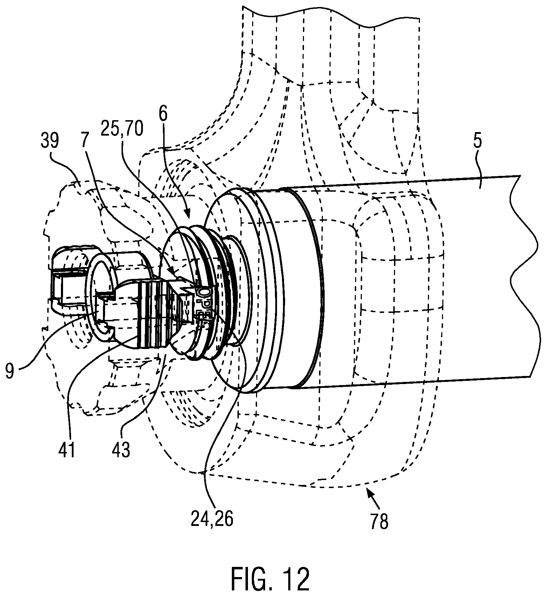

Ein weiteres Ausführungsbeispiel eines erfindungsgemäßen Bauteils 1 ist in den Fig. 10 bis 12 dargestellt. Dieses Ausführungsbeispiel unterscheidet sich von dem oben genannten Ausführungsbeispiel dadurch, dass das Indikatororgan 20 nicht auf der Seite der Aufnahme 39 bzw. des Verschlusses 6 oder der Verschlusssperre 7 angeordnet ist, sondern an dem von dem Verschlusselement 35 abgewandten Ende des Schließorgans 5, hier beispielsweise an einer Umfangsfläche im Bereich des Kopfes 65. Das Indikatororgan 20 ist eine farblich deutliche, bevorzugt ringförmige Markierung 29, vorzugsweise direkt unterhalb des Kopfes 65, die solange sichtbar ist, bis das Schließorgan 5 vollständig in der Durchstecköffnung 13 eingeschoben ist und somit die Schließstellung 78 (Fig. 11, 12) erreicht ist. Die Markierung 29 ist in einem solchen Fall beispielsweise rot, um einem Benutzer den Gefahrenzustand zu signalisieren, solange sie zu sehen ist. Diese Ausgestaltung eines Indikatororgans kann mit der Ausgestaltung des Indikatororgans des vorherigen Ausführungsbeispiels kombiniert werden, um sowohl die nicht eingenommene Schließstellung 78 als auch die Schließstellung 78 von außen erkennbar anzuzeigen.

Im Unterschied zum vorangegangen Ausführungsbeispiel ist bei diesem Ausführungsbeispiel ferner die Aufnahme 39 kappenförmig, das Greiforgan 9 bildet keinen Verschlussdeckel. Vielmehr verschließt die Aufnahme 39 selbst zumindest einen Teil der Durchstecköffnung 14 bzw. deren Verlängerung in Form des Innenraums 43 der Aufnahme 39.

Die Aussparung 26 ist nicht sektor- sondern schlitzförmig und der Rastvorsprung 70 ist rippenförmig. Im Übrigen sind Funktion und Aufbau des Bauteils 1 die gleichen wie beim vorangegangenen Ausführungsbeispiel.

Anstelle der bislang gezeigten Variante, bei der das Greiforgan 9 von der Außenseite der Aufnahme 39 her in die Aufnahme 39 gesetzt wird, kann das Greiforgan 9 übrigens auch von der anderen, dem Grundkörper 2 zugewandten Seite der Aufnahme 39 her eingesetzt werden. In einem solchen Fall kann die Aufnahme 39 vollständig geschlossen werden, was zu einer besseren Abkapselung des Innenraums 43 führt.

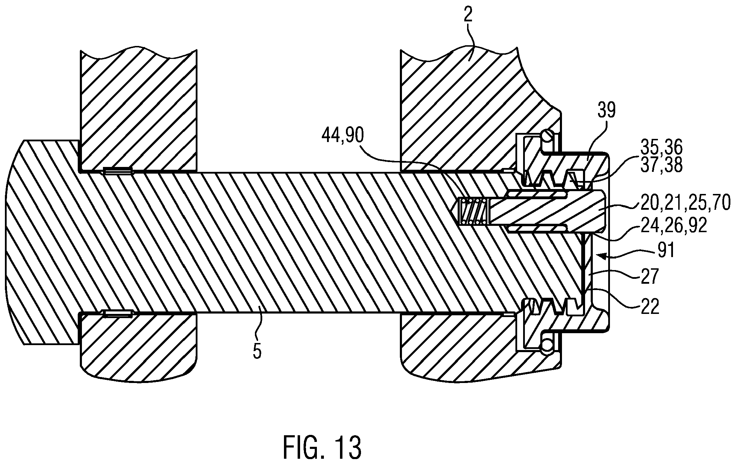

In Fig. 13 ist ein drittes Ausführungsbeispiel eines erfindungsgemäßen Bauteils 1 dargestellt. Das Indikatororgan 20 ist bei dieser Ausgestaltung beweglich, vorzugsweise unter Federspannung beweglich, im Schließorgan 5 aufgenommen. Ein Stift 21 wird von einer Feder 90 aus der Stirnfläche 22 gedrückt. Das Indikatororgan 20 dient gleichzeitig als Sperrelement 25, indem es einen federgespannten Rastvorsprung bildet, der in eine aufnahmeseitige Aussparung einrastet, sobald die Schließstellung erreicht ist. Hierzu ist die Aufnahme 39 mit einer deckelförmigen Rastplatte 91 versehen, bei der das Sperrelement 25 von einer Öffnung an einer relativ zum Gewindeanschnitt vorbestimmten Winkelposition liegt.

Die Rastplatte 91 dient gleichzeitig als Abdeckorgan 27, das verhindert, dass das Indikatororgan 20 von außen zu sehen ist, solange die Schließstellung 78 nicht erreicht ist.

Beim Eindrehen des Gewindes vor Erreichen der Schließstellung ist zunächst wieder bei der ersten relativen Umdrehung zwischen Schließorgan 5 und Aufnahme 39 das Indikatororgan 20 von der Aufnahme 39 beabstandet. Erst kurz nach der ersten Umdrehung, wenn das Indikatororgan 20 an der Aussparung der Rastplatte 91 vorbeibewegt ist, stützt sich das Indikatororgan 20 an der Rastplatte 91 ab. Mit zunehmendem Eindrehen des Schließorgans 5 wird das Indikatororgan 20 in das Schließorgan 5 gegen die Wirkung der Feder 90 eingedrückt, bis es die Öffnung 92 erreicht und durch die Öffnung selbsttätig unter der Wirkung der Feder 90 vorspringt. Nun ist die Verschlusssperre 7 aktiviert und das Indikatororgan 20 von außen erkennbar. Das Indikatororgan 20 ist also gleichzeitig das Sperrelement 25 bzw. der Rastvorsprung 70, der in die als Sperrelement 24 bzw. Ausnehmung 26 dienende Öffnung 92 verrastet.

Zum Lösen der Verschlusssperre 7 wird das Indikatororgan 20 eingedrückt und das Schließorgan 5 aus der Aufnahme 39 geschraubt.

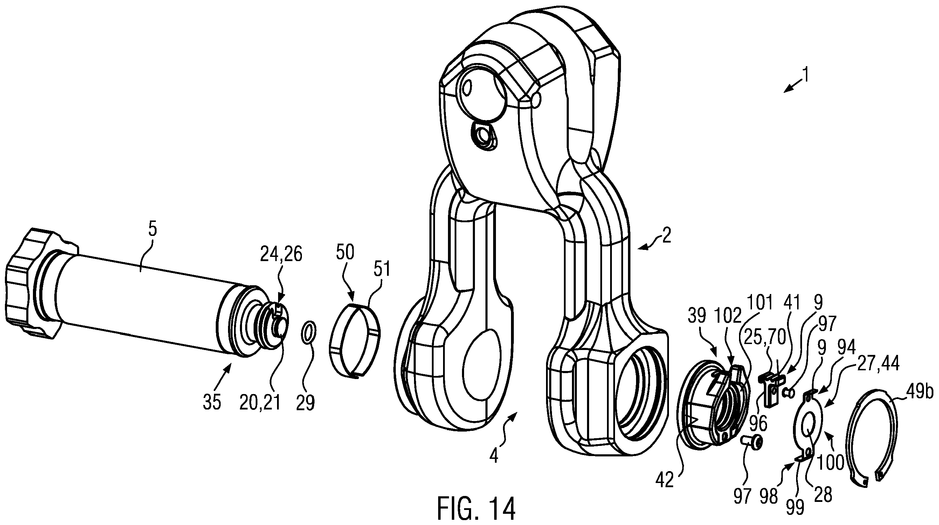

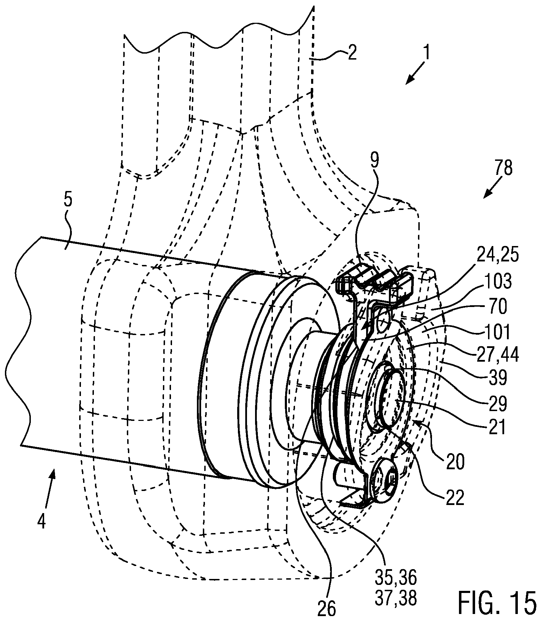

Die Figuren 14 und 15 zeigen ein weiteres Ausführungsbeispiel eines erfindungsgemäßen Bauteils 1.

Die Ausgestaltung des Schließorgans 5 entspricht im Wesentlichen der Ausgestaltung des Ausführungsbeispiels der Fig. 1. Im Unterschied zu diesem Ausführungsbeispiel ist beim Ausführungsbeispiel der Fig. 14 und 15 die als Sperrelement 24 dienende Aussparung 26 nicht mit einer torten- oder dreiecksförmigen Grundfläche, sondern mit einer rechteckigen Grundfläche versehen.

Ferner ist die Markierung 29 bei dem Ausführungsbeispiel der Fig. 14 und 15 als ein farbiger Ring ausgestaltet, der in eine entsprechende Nut 93 des hier ebenfalls als Stift 21 ausgestalteten Indikatororgans 20 eingelegt ist. Die Markierung 29 kann beispielsweise ein farbiger Gummi- oder Kunststoffring sein.

Ein weiterer Unterschied des Ausführungsbeispiels der Fig. 14 zu den vorangegangenen Ausführungsbeispielen besteht darin, dass nunmehr die Funktionen der Sicherungsfeder 44 und des Greiforgans 9 in einem gemeinsamen Bauteil vereint sind. Zu diesem Zwecke ist die Sicherungsfeder 44 als eine Blattfeder ausgestaltet, an der ein als Greiforgan 9 dienender, hier plättchenförmiger Abschnitt 94 befestigt ist. Der Abschnitt 94 ragt seitlich aus der Aufnahme 39, so dass er von Hand ergriffen und ausgelenkt werden kann. Der Abschnitt 94 ist von einem Teil 96 gebildet, das gleichzeitig als Sperrelement 25 bzw. Rastvorsprung 70 dient. Die Sicherungsfeder 44 kann als Stanzbiegeteil aus einem Blech, beispielsweise einem Federstahlblech, gefertigt sein. Das Teil 96 kann mittels eines Befestigungsmittels 97, beispielsweise eines Niets oder einer Schraube, an der Sicherungsfeder befestigt sein. Auch ein Verschweißen, Verlöten und/oder Verklemmen des Teils 96 in der Tasche 95 ist möglich. Dargestellt ist lediglich beispielhaft eine formschlüssige Verbindung.

Die Sicherungsfeder 44 ist an einer Befestigungsstelle 98 an der Aufnahme 39 auslenkbar befestigt. Auch diese Befestigung kann über Befestigungselemente wie eine Schraube oder eine Niet und/oder stoff- oder formschlüssige Verbindungen erfolgen. Die Befestigungsstelle 98 kann in einer weiteren, insbesondere an die Umfangsfläche 42 der Aufnahme 39 umgebogene Lasche 99 gebildet sein. Die Lasche 99 kann der Lasche 94 gegenüberliegen.

Ferner kann die Sicherungsfeder 44 gleichzeitig als Abdeckorgan 27 dienen, das wie bei den vorangegangenen Ausgestaltungen die Markierung 29 so lange abdeckt, bis die in Fig. 15 dargestellte Schließstellung 78 erreicht ist.

Die Sicherungsfeder 44 kann hierzu eine Öffnung 28 aufweisen, durch die die Markierung 29 auf ihrem Weg von der Offen- in die Schließstellung hindurchgeführt wird. Die Öffnung 28 kann in einem ringförmigen oder scheibenförmigen Zentralabschnitt 100 der Sicherungsfeder 44 ausgebildet sein. Der Zentralabschnitt 100 ist von der dem Durchlass 4 gegenüberliegenden Seite der Aufnahme 39 in diese einsetzbar.

Die Aufnahme 39 kann zum Schutz der Sicherungsfeder 44, die von außen zugänglich die Aufnahme 39 auf der von Durchlass 4 abgewandten Seite verschließt, mit einem Kragen 101 versehen sein. Der Kragen enthält zumindest eine Aussparung 102, durch die das Greiforgan 9 aus der Umfangsfläche 42 der Aufnahme 39 ragt.

Eine Stirnfläche des Kragens 101 ist bevorzugt angeschrägt, so dass er zu der bei Betätigung des Greiforgans 9 am stärksten hin ausgelenkten Stelle der Sicherungsfeder 44 hin höher wird. Bei dem Ausführungsbeispiel der Fig. 14 und 15 entspricht diese Stelle der Lage des Greiforgans 9. Durch die zunehmende Höhe des Kragens bleibt die Sicherungsfeder 44 auch dann geschützt, wenn sie ausgelenkt ist.

In der in Fig. 15 dargestellten Schließstellung 78 ragt das Teil 96 in die Aussparung 26 und sichert den Verschluss 6. Zum Lösen der Verschlusssperre wird die Sicherungsfeder 44 ausgelenkt, indem das Greiforgan 9 von der Durchlassöffnung 4 wegbewegt wird, bis das Teil 96 die Aussparung 26 freigibt.

Um zu verhindern, dass die Sicherungsfeder 44 beim Lösen der Verschlusssperre oder während des Betriebs in der Schließstellung zu stark ausgelenkt wird und sich plastisch verformt, verschleißt oder bricht, ist im Bereich der Aussparung 102 ein Anschlag 103 vorgesehen. Der Anschlag 103 begrenzt die Auslenkbarkeit des Greiforgans 9. Der Anschlag 103 kann beispielsweise in Form einer Abdrückung an dem vom Grundkörper 2 weg weisenden Ende der Aussparung 102 angebracht sein und verhindern, dass das Greiforgan 9 aus der Aufnahme 39 bewegt wird.

Zum sicheren Verschließen des Durchlasses 4 wird der Schließbolzen wie bei den vorangegangenen Ausführungsbeispielen zunächst in die Aufnahme 39 geschraubt. Außen- und Innengewinde 37, 38 sind mit in ihrer Lage vorbestimmten Anschnittstellen relativ zur Lage der Sperrelemente 24, 25 versehen, wie bei den übrigen Ausführungsbeispielen auch. Dadurch kann sichergestellt werden, dass die Verschlusssperre 7 erst nach einer bestimmten Einschraubtiefe aktiviert wird.

Bevor das Teil 96 in die Aufnahme 26 schnappt und den Verschluss 6 sichert, wird die Sicherungsfeder 44 durch die Stirnfläche des Schließbolzens 5 von der Aufnahme 39 weggedrückt, so dass sie die Markierung 29 abdeckt. Erst wenn der Formschluss der Verschlusssperre 7 hergestellt ist und die Sicherungsfeder 44 an der Stirnfläche 22 des Schließbolzens 5 anliegt und somit die Schließstellung 78 sicher erreicht ist, gibt die Sicherungsfeder den Blick auf die Markierung 29 frei.

Weitere Varianten des Bauteils 1 sind möglich. So kann anstelle der axialen Ausrichtung des Indikatororgan 20, das gleichzeitig als Sperrelement der Verschlusssperre 7 dient, eine radiale Ausrichtung gewählt werden, indem sich die Öffnung 92 an der Umfangsfläche 42 der Aufnahme 39 befindet und das Indikatororgan 20 in einer Radialbohrung des Schließorgans 5 aufgenommen ist.

Kommt es bei den oben beschriebenen Ausgestaltungen nicht auf eine drehbare Lagerung des Schließorgans 5 in der Schließstellung an, so kann die Aufnahme 39 stets auch entweder starr mit dem Grundkörper 2 verbunden, beispielsweise verschweißt, sein oder monolithisch in den Grundkörper 2 integriert sein. Bei dieser Ausgestaltung sollte darauf geachtet werden, dass der Verschluss 6 und die Verschlusssperre 7 ausreichend radiales Spiel gewähren, so dass sie bei einer Belastung des Schließorgans 5 kraftfrei bleiben, indem das Schließorgan 2 in den Durchstecköffnungen 13 oder 14 aufliegt.

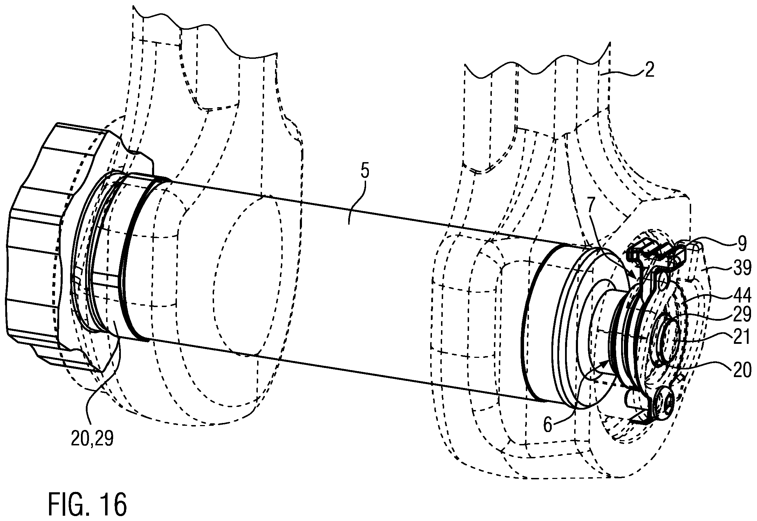

Fig. 16 zeigt eine solche starre Variante des Bauteils 1 ausgehend vom Ausführungsbeispiel der Fig. 15 und 16.

### Bezugszeichen

- 1: Bauteil
- 2: Grundkörper
- 3: Öffnung
- 4: Durchlass
- 5: Schließorgan
- 6: Verschluss
- 7: Verschlusssperre
- 8: Torsions- bzw. Drehkraft
- 9: Greiforgan
- 10: Bügel
- 11, 12: sich gegenüberliegende Seiten der Öffnung
- 13, 14: Durchstecköffnungen
- 20: Indikatororgan
- 21: Stift
- 22: Stirnfläche
- 23: Längsachse des Schließorgans
- 24,25: Sperrelemente
- 26: Aussparung
- 27: Abdeckorgan
- 28: Öffnung des Abdeckorgans
- 29: Markierung
- 30: separate Hülse
- 35, 36: Verschlusselemente
- 37: Außengewinde
- 38: Innengewinde
- 39: Aufnahme
- 40: Formschlusselemente
- 41: Handhabungsfläche
- 42: Umfangsfläche der Aufnahme
- 43: Innenraum der Aufnahme
- 44: Sicherungsfeder
- 45: Schlitze
- 46: Ausleger
- 47: Durchsteckrichtung
- 48: Stützring
- 49a, 49b: Seegerringe
- 50: Sicherungsgesperre
- 51: Ringfeder
- 52: Ringkragen
- 53: Nut
- 54: Abstand zwischen dem Ende des Schließorgans und der Nut
- 55: Ende des Schließorgans
- 60: Schließbolzen
- 61: Bereich des Schließbolzens
- 62: Außendurchmesser des Außengewindes
- 63: Körper des Schließorgans
- 64: anderes Ende des Schließorgans
- 65: Kopf
- 66: Formschluss-/Greifelemente am Kopf
- 67: Umfangsfläche des Verschlusselements
- 70: Rastvorsprung
- 71: Höhe des Rastvorsprungs
- 75: Offenstellung
- 76: ringförmige Wulst
- 77: Höhe
- 78: Schließstellung
- 80: weitere Nut
- 81: Tragflächen der Durchstecköffnungen
- 90: Feder für Indikatororgan
- 91: Rastplatte
- 92: Öffnung
- 93: Nut im Indikatororgan
- 94: laschenförmiger Abschnitt
- 96: Teil zur Bildung eines Rastvorsprunges
- 97: Befestigungsmittel
- 98: Befestigungsstelle
- 99: weitere Lasche
- 100: Zentralabschnitt
- 101: Kragen
- 102: Aussparung des Kragens
- 103: Anschlag

## Patentansprüche

1. Bauteil (1) der Hebe-, Zurr- oder Anschlagtechnik für Outdoor- oder Offshore-Anwendungen, insbesondere in Schäkelform, mit einer von einem Grundkörper (2) gebildeten Öffnung (3), die wenigstens einen verschließbaren Durchlass (4) aufweist, mit einem Schließorgan (5), durch das in einer Schließstellung (78) der Durchlass (4) verschlossen ist, mit einem Verschluss (6), durch den das Schließorgan (5) in der Schließstellung (78) gegenüber dem Grundkörper (2) drehbar und gegen ein Öffnen des Durchlasses (4) gesichert gehalten ist, und mit einer Verschlusssperre (7), die selbsttätig in der Schließstellung (78) aktiviert ist, durch die der Verschluss (6) in der Schließstellung (78) blockiert ist und die ein von Hand werkzeugfrei betätigbar ausgestaltetes Greiforgan (9) zum Lösen der Verschlusssperre (7) aufweist, **dadurch gekennzeichnet, dass** der Verschluss (6) drehbar in Eingriff miteinander bringbare Verschlusselemente (35, 36) an dem Schließorgan (5) und eine drehbar am Grundkörper (2) gehalterte Aufnahme (39) für das Schließorgan (5) aufweist.

2. Bauteil (1) der Hebe-, Zurr- oder Anschlagtechnik nach Anspruch 1, wobei die Verschlusselemente (35, 36) als Innen- (38) und Außengewinde (37) ausgestaltet sind.

3. Bauteil (1) der Hebe-, Zurr- oder Anschlagtechnik nach Anspruch 1 oder 2, wobei ein Indikatororgan (20), das bei aktivierter Verschlusssperre (7) von außerhalb des Bauteils (1) erkennbar und bei nicht aktivierter Verschlusssperre (7) verdeckt, und/oder ein Indikatororgan (20), das bei nicht aktivierter Verschlusssperre (7) von außerhalb des Bauteils (1) erkennbar und bei aktivierter Verschlusssperre (7) verdeckt angeordnet ist, vorgesehen ist.

4. Bauteil (1) der Hebe-, Zurr- oder Anschlagtechnik nach Anspruch 3, wobei die Verschlusssperre (7) zwei miteinander verrastende Sperrelemente (24, 25) aufweist und das Indikatororgan (20) mit einem der Sperrelemente (24, 25) bewegungsübertragend verbunden ist.

5. Bauteil (1) der Hebe-, Zurr- oder Anschlagtechnik nach Anspruch 4, wobei das Indikatororgan (20) stoffschlüssig mit einem der Sperrelemente (24, 25) verbunden ist.

6. Bauteil (1) der Hebe-, Zurr- oder Anschlagtechnik nach einem der Ansprüche 3 bis 5, wobei ein in Überdeckung mit dem Indikatororgan (20) relativ zum Indikatororgan (20) bewegliches Abdeckorgan (27) vorgesehen ist, das mit einem der Sperrelemente (24, 25) bewegungsübertragend verbunden ist.

7. Bauteil (1) der Hebe-, Zurr- oder Anschlagtechnik nach Anspruch 6, wobei das Abdeckorgan (27) stoffschlüssig mit einem der Sperrelemente (24, 25) verbunden ist.

8. Bauteil (1) der Hebe-, Zurr- oder Anschlagtechnik nach Anspruch 6 oder 7, wobei das Indikatororgan (20) und das Abdeckorgan (27) in der Schließstellung (78) gegenüber dem Grundkörper (2) drehbar sind.

9. Bauteil (1) der Hebe-, Zurr- oder Anschlagtechnik nach einem der Ansprüche 1 bis 8, wobei die Aufnahme (39) mutternförmig ausgestaltet ist.

10. Bauteil (1) der Hebe-, Zurr- oder Anschlagtechnik nach einem der Ansprüche 1 bis 9, wobei das Greiforgan (9) drehbar relativ zum Grundkörper (2) gehaltert ist.

11. Bauteil (1) der Hebe-, Zurr- oder Anschlagtechnik nach einem der Ansprüche 1 bis 10, wobei das Greiforgan (9) in der Aufnahme (39) relativ zu dieser beweglich gehaltert ist.

12. Bauteil (1) der Hebe-, Zurr- oder Anschlagtechnik nach einem der Ansprüche 1 bis 11, wobei das Greiforgan (9) und eine Sicherungsfeder (44) der Verschlusssperre (7) monolithisch vereint sind.

13. Bauteil (1) der Hebe-, Zurr- oder Anschlagtechnik nach einem der Ansprüche 1 bis 12, wobei die Verschlusssperre (7) sich selbsttätig nur in einer vorbestimmten Stellung des Verschlusses (6) aktiviert.

14. Bauteil (1) der Hebe-, Zurr- oder Anschlagtechnik nach einem der Ansprüche 1 bis 13, wobei der Verschluss (6) durch eine Drehbewegung betätigbar und die Verschlusssperre (7) senkrecht zu dieser Drehbewegung lösbar ausgestaltet ist.

15. Bauteil (1) der Hebe-, Zurr- oder Anschlagtechnik nach einem der Ansprüche 1 bis 14, wobei eine Sicherungsgesperre (50) vorgesehen ist, durch das das Schließorgan (5) bei geöffnetem Durchlass (4) am Grundkörper (2) gesichert ist.

## Claims

1. Component (1) for lifting, lashing or stop technology for outdoor or offshore applications, particularly in the form of shackles, having an opening (3) formed by a base body (2), which has at least one closable passage (4), a closing element (5), by means of which the passage (4) is closed in a closed position (78), a closure (6), by means of which the closing element (5) is held rotatably in the closed position (78) with respect to the base body (2) and is secured against opening of the passage (4), and a safety catch (7) which is automatically activated in the closed position (78), by means of which the closure (6) is blocked in the closed position (78) and which has a gripping element (9) which can be operated by hand without tools to release the safety catch (7), **characterised in that** the closure (6) has closure members (35, 36) which can be brought into engagement with one another in a rotatable manner on the closing element (5) and on a receptacle (39) for the closing element (5), which receptacle is rotatably held on the base body (2).

2. Component (1) for lifting, lashing or stop technology according to claim 1, wherein the closure members (35, 36) are configured as an inner thread (38) and an outer thread (37).

3. Component (1) for lifting, lashing or stop technology according to either claim 1 or claim 2, wherein an indicator element (20) is provided which is recognisable from outside the component (1) when the safety catch (7) is activated and is covered when the safety catch (7) is not activated, and/or an indicator element (20) is provided which is recognisable from outside the component (1) when the safety catch (7) is not activated and is covered when the safety catch (7) is activated.

4. Component (1) for lifting, lashing or stop technology according to claim 3, wherein the safety catch (7) has two locking members (24, 25) which interlock and the indicator element (20) is connected in a motion-transmitting manner to one of the locking members (24, 25).

5. Component (1) for lifting, lashing or stop technology according to claim 4, wherein the indicator element (20) is integrally connected to one of the locking members (24, 25).

6. Component (1) for lifting, lashing or stop technology according to any of claims 3 to 5, wherein a cover element (27) is provided which is movable relative to the indicator element (20) into overlap with the indicator element (20), said cover element being connected to one of the locking members (24, 25) in a motion-transmitting manner.

7. Component (1) for lifting, lashing or stop technology according to claim 6, wherein the cover element (27) is integrally connected to one of the locking members (24, 25).

8. Component (1) for lifting, lashing or stop technology according to either claim 6 or claim 7, wherein the indicator element (20) and the cover element (27) are rotatable relative to the base body (2) in the closed position (78).

9. Component (1) for lifting, lashing or stop technology according to any of claims 1 to 8, wherein the receptacle (39) is nut-shaped.

10. Component (1) for lifting, lashing or stop technology according to any of claims 1 to 9, wherein the gripping element (9) is rotatably supported relative to the base body (2).

11. Component (1) for lifting, lashing or stop technology according to any of claims 1 to 10, wherein the gripping element (9) is movably held in the receptacle (39) relative to said receptacle.

12. Component (1) for lifting, lashing or stop technology according to any of claims 1 to 11, wherein the gripping element (9) and a securing spring (44) of the safety catch (7) are monolithically combined.

13. Component (1) for lifting, lashing or stop technology according to any of claims 1 to 12, wherein the safety catch (7) is activated automatically only in a predetermined position of the closure (6).

14. Component (1) for lifting, lashing or stop technology according to any of claims 1 to 13, wherein the closure (6) can be actuated by a rotary movement and the safety catch (7) is designed to be releasable perpendicular to this rotary movement.

15. Component (1) for lifting, lashing or stop technology according to any of claims 1 to 14, wherein a securing lock (50) is provided, by means of which the closing element (5) is secured on the base body (2) when the passage (4) is open.

## Revendications

1. Composant (1) relevant de la technique de levage, d'amarrage ou de blocage pour des applications en extérieur ou offshore, en particulier sous forme de manille, avec une ouverture (3) formée par un corps de base (2), qui présente au moins un passage (4) pouvant être fermé, avec un organe de fermeture (5), au moyen duquel le passage (4) est fermé dans une position de fermeture (78), comportant une fermeture (6) au moyen de laquelle l'organe de fermeture (5) est maintenu dans la position de fermeture (78) de manière à pouvoir tourner par rapport au corps de base (2) et à être protégé contre l'ouverture du passage (4), et avec un verrou de fermeture (7) qui est automatiquement activé en position fermée (78), par lequel la fermeture (6) est bloquée en position fermée (78) et qui comporte un organe de préhension (9), qui peut être actionné à la main sans outils, pour libérer le verrou de fermeture (7), **caractérisé en ce que** la fermeture (6) comporte des éléments de fermeture (35, 36) sur l'organe de fermeture (5) qui peuvent être mis en prise l'un avec l'autre de manière rotative et un logement (39) pour l'organe de fermeture (5) qui est monté de manière rotative sur le corps de base (2).

2. Composant (1) relevant de la technique de levage, d'amarrage ou de blocage selon la revendication 1, dans lequel les éléments de fermeture (35, 36) sont conçus comme des filetages internes (38) et externes (37).

3. Composant (1) relevant de la technique de levage, d'amarrage ou de blocage selon la revendication 1 ou 2, dans lequel il est prévu un élément indicateur (20) qui est détectable de l'extérieur du composant (1) lorsque le verrou de fermeture (7) est activé et qui est dissimulé lorsque le verrou de fermeture (7) n'est pas activé, et/ou il est prévu un élément indicateur (20) qui est détectable de l'extérieur du composant (1) lorsque le verrou de fermeture (7) n'est pas activé et qui est dissimulé lorsque le verrou de fermeture (7) est activé.

4. Composant (1) relevant de la technique de levage, d'amarrage ou de blocage selon la revendication 3, dans lequel le verrou de fermeture (7) présente deux éléments de verrouillage (24, 25) qui s'enclenchent l'un dans l'autre et l'organe indicateur (20) est relié à l'un des éléments de verrouillage (24, 25) de manière à transmettre le mouvement.

5. Elément (1) relevant de la technique de levage, d'amarrage ou de blocage selon la revendication 4, dans lequel l'élément indicateur (20) est relié de façon matérielle à l'un des éléments de verrouillage (24, 25).

6. Elément (1) relevant de la technique de levage, d'amarrage ou de blocage selon l'une quelconque des revendications 3 à 5, dans lequel il est prévu un élément de recouvrement (27) mobile par rapport à l'élément indicateur (20) en chevauchement avec l'élément indicateur (20), qui est relié à l'un des éléments de verrouillage (24, 25) de manière à transmettre le mouvement.

7. Elément (1) relevant de la technique de levage, d'amarrage ou de blocage selon la revendication 6, dans lequel l'élément de couverture (27) est relié par une liaison matérielle à l'un des éléments de verrouillage (24, 25).

8. Elément (1) relevant de la technique de levage, d'amarrage ou de blocage selon les revendications 6 ou 7, dans lequel l'élément indicateur (20) et l'élément de couverture (27) peuvent tourner par rapport au corps de base (2) en position fermée (78).

9. Elément (1) relevant de la technique de levage, d'amarrage ou de blocage selon l'une des revendications 1 à 8, dans lequel le récipient (39) est conçu sous forme d'écrou.

10. Composant (1) relevant de la technique de levage, d'amarrage ou de blocage selon l'une des revendications 1 à 9, dans lequel l'élément de préhension (9) est monté de manière à pouvoir tourner par rapport au corps de base (2).

11. Elément (1) relevant de la technique de levage, d'amarrage ou de blocage selon l'une des revendications 1 à 10, dans lequel l'organe de préhension (9) est monté dans le réceptacle (39) de manière à être mobile par rapport à celui-ci.

12. Elément (1) relevant de la technique de levage, d'amarrage ou de blocage selon l'une des revendications 1 à 11, dans lequel l'organe de préhension (9) et un ressort de sécurité (44) du dispositif de verrouillage (7) sont réunis de manière monolithique.

13. Composant (1) relevant de la technique de levage, d'amarrage ou de blocage selon l'une des revendications 1 à 12, dans lequel le dispositif de verrouillage (7) n'est activé automatiquement que dans une position prédéterminée du dispositif de verrouillage (6).

14. Elément (1) relevant de la technique de levage, d'amarrage ou de blocage selon l'une des revendications 1 à 13, dans lequel la fermeture (6) peut être actionnée par un mouvement de rotation et le verrou de fermeture (7) est conçu pour pouvoir être libéré perpendiculairement à ce mouvement de rotation.

15. Elément (1) relevant de la technique de levage, d'amarrage ou de blocage selon l'une des revendications 1 à 14, dans lequel il est prévu un verrou de sécurité (50) par lequel l'élément de fermeture (5) est fixé au corps de base (2) lorsque le passage (4) est ouvert.
